Europäisches Patentamt

European Patent Office

Office européen des brevets

(11) Publication number: **0 159 186**
**B1**

# EUROPEAN PATENT SPECIFICATION

(45) Date of publication of patent specification: 26.07.89

(51) Int. Cl.⁴: **C 04 B 35/56**

(21) Application number: **85302633.4**

(22) Date of filing: **15.04.85**

(54) **Method manufacturing high-strength sintered silicon carbide articles.**

(30) Priority: **13.04.84 JP 74228/84**

(43) Date of publication of application:
**23.10.85 Bulletin 85/43**

(45) Publication of the grant of the patent:
**26.07.89 Bulletin 89/30**

(84) Designated Contracting States:
**CH DE FR GB LI SE**

(56) References cited:
**US-A-4 312 954**

**CHEMICAL ABSTRACTS, vol. 96, no. 6,
February 1982, page 293, no. 39708u,
Columbus, Ohio, US; & JP - A - 81 100 167
(NATIONAL INSTITUTE FOR RESEARCH IN
INORGANIC MATERIALS) 11-08-1981**

**CHEMICAL ABSTRACTS, vol. 103, no. 8, 26th
August 1985, page 260, no. 58031x, Columbus,
Ohio, US; & JP - A - 60 36 375 (SUMITOMO
ALUMINIUM SMELTING CO. LTD.) 25-02-1985**

(73) Proprietor: **SUMITOMO CHEMICAL COMPANY,
LIMITED**
**Kitahama 4-chome 5-33**
**Chuo-ku Osaka 541 (JP)**

(72) Inventor: **Yamada, Koichi**
**8-7 Hishigoecho**
**Niihama Ehime-ken (JP)**
Inventor: **Mouri, Masahide**
**2-2-237 Ikkucho**
**Niihama Ehime-ken (JP)**
Inventor: **Nomura, Yoshisaburo**
**782-1, Kaburazaki**
**Doi-cho Uma-gun Ehime-ken (JP)**

(74) Representative: **Geering, Keith Edwin et al
REDDIE & GROSE 16 Theobalds Road
London WC1X 8PL (GB)**

(56) References cited:
**CHEMICAL ABSTRACTS, vol. 100, no. 22, 28th
May 1984, page 268, no. 179225k, Columbus,
Ohio, US; & JP - A - 59 18 164 (TOKYO YOGYO
CO. LTD.) 20-01-1984**

Courier Press, Leamington Spa, England.

EP 0 159 186 B1

# EP 0 159 186 B1

**Description**

The present invention relates to a method for manufacturing high-strength sintered silicon carbide. The method involves mixing finely divided silicon carbide powder with definite amounts of specific carbon-containing material, boron component and silicon powder as densification aids, shaping, and then sintering the shaped mixure under an inert atmosphere.

Sintered silicon carbide has excellent physical and chemical properties; in particular it has high strength and excellent corrosion resistance and its mechanical properties do not change even at high temperature as compared with those at normal temperature. Therefore, sintered silicon carbide has been regarded as promising as a wear-resistant and high-temperature structural material. However, it has been difficult to sinter it into a high-density sintered article, so that sintering by hot press methods and sintering using densification aids have been proposed.

For example, in Japanese Patent Publication No. 32035/1982, it is disclosed that a sintered silicon carbide article having a sintered density of 85% or greater of the theoretical density value is manufactured by sintering a homogeneous dispersion of powder particles of a size of 1 micron or less consisting essentially of beta phase silicon carbide, a boron compound in an amount corresponding to 0.3—3.0% by weight of boron and a carbon source in an amount corresponding to 0.1—1.0% by weight of elemental carbon in an atmosphere chemically inert to silicon carbide at a temperature of from 1900 to 2100°C. Further, in Japanese Patent Laid-Open No. 148712/1976, it is disclosed that a sintered silicon carbide article having a sintered density of 2.40 g/cm³ or greater is manufactured by admixing 91—99.35 parts by weight of alpha phase silicon carbide powder having a specific surface area of 1—100 m²/g with 0.67—20 parts by weight of a carbonizable, organic solvent-soluble organic material having a carbonization ratio of 25—75% by weight, a definite amount of a boron compound containing 0.15—3.0 parts by weight of boron component and 5—15 parts by weight of a temporary binding agent which is consumed under sintering conditions, and then sintering the resulting mixture. However, although a sintered silicon carbide article of a high sintered density is obtained by the latter method, the mechanical strength of the sintered article is not always satisfactory and, for example, a sintered silicon carbide article having a bending strength exceeding 50 kg/mm² could not be obtained by the known methods.

In US Patent No. 4312954 there is described a method of pressureless sintering of silicon carbide in an inert gas atmosphere at a temperature of from about 1900°C to about 2500°C to produce ceramic bodies essentially of:

91 to about 99.35% by weight of SiC
0.15 to about 3.0% by weight B
0.5 to about 5.0% by weight uncombined carbon.

The preferred carbon source is phenolic resin. As an alternative, coal tar pitch may be used, and an example is given showing a product having a sintered density of 2.44×10⁶g/m³ (76% of the theoretical density of silicon carbide).

Our EP 85302117.8 discloses that a high-strength sintered silicon carbide article can be manufactured by adding coal tar pitch or oil tar pitch in such an amount as to provide 4.2—6 parts by weight of carbon after carbonization and a boron component in an amount corresponding to 0.03—0.15 parts by weight of boron as densification aids to 100 parts by weight of finely divided silicon carbide powder and mixing, shaping the resulting mixture, and then sintering the shaped mixture.

However, as a large amount of tar pitch is necessary to obtain a sintered article of high density by the latter method, it can have defects—e.g. the density of green articles may be low, thermal decomposition of organic substance may take a long time, its productivity may be less than desired, or the dimensional accuracy of the sintered articles may be imperfect.

We have now found that the amount of tar pitch added can be reduced, and improvement obtained, by addition of a small amount of silicon.

In accordance with the present invention, there is provided a method for manufacturing a sintered silicon carbide article which comprises the steps of adding tar pitch in an amount of 2—10 parts by weight, boron-containing component in an amount corresponding to 0.03—0.15 parts by weight of boron, and silicon powder in an amount of 0.3—3 parts by weight as densification aids to 100 parts by weight of finely divided silicon carbide powder and mixing, shaping the resulting mixture, and then sintering the shaped green article in an inert atmosphere at a temperature of from 1900 to 2300°C.

In the present invention, as finely divided silicon carbide powder, it is suitable to employ a silicon carbide powder consisting essentially of silicon carbide selected from the group consisting of alpha phase silicon carbide (α-phase), beta phase silicon carbide (β-phase) and mixtures thereof. Further, it is preferred to use a silicon carbide powder having an average particle size of 1 micron or less. These silicon carbides generally include 0.2—2% by weight of free carbon.

In the present invention, tar pitch in an amount of 2—10, preferably 3—6 parts by weight, boron component in an amount corresponding 0.03—6.15, preferably 0.05—0.15 parts by weight of boron, and silicon powder in an amount of 0.3—3, preferably 0.5—1 parts by weight, as densification aids, are added to and mixed with 100 parts by weight of silicon carbide powder.

When the amount of silicon powder added to the silicon carbide powder is less than 0.3 parts by weight, the silicon powder does not effectively restrain the grain growth of silicon carbide and it is

2

impossible to obtain a sintered article having a high sintered density, so that such a small addition is not suitable. On the other hand, when the amount of silicon powder added exceeds 3 parts by weight silicon evaporates at a temperature exceeding its melting point, leaving pores, and the mechanical strength of the sintered article is lowered, so that such a large addition is not suitable. It is preferred that the silicon added is fine powder, but when it is too fine, the oxidized layer on the surface of the powder particles increases, so that silicon powder having a particle size of about 0.1—10 microns is preferred.

As boron component, those stable up to the sintering temperature, such as boron or boron carbide, are used. When the boron component added provides less than 0.03 parts by weight of boron, it is impossible to obtain a sintered article having a high sintered density. On the other hand, when the amount of boron exceeds the upper limit, it is possible to obtain a sintered article having a high sintered density, but the mecmanical strength of the sintered article is inadequate.

The tar pitch used in the invention as a densification aid can be commercial coal or oil tar pitch; preferred is an organic solvent-soluble coal tar pitch or oil tar pitch having a carbonization ratio of 40—60% by weight. The tar pitch can be mixed uniformly with silicon carbide powder as a solution in an organic solvent such as benzene, quinoline, anthracene, or the like or as an emulsion in water. When the amount of tar pitch added to the silicon carbide powder is less than 2 parts by weight, the tar pitch does not sufficiently restrain the growth of crystal grains of silicon carbide and also does not remove smoothly the oxide layer on the surface of the shaped mixture, so that the sintered article has a low density. On the other hand, when the amount of tar pitch added exceeds 10 parts by weight, the green compact has a lowered density, thermal decomposition of the tar pitch requires a long time and its productivity for the sintered article is inferior, so that such a large addition is not preferred.

In the present invention, the silicon carbide powder, boron component, tar pitch and silicon powder can be mixed uniformly using an organic solvent such as benzene, quinoline, anthracene, or the like or water; the resulting mixture can be shaped by known slip casting methods or spray dried to obtain a granular mixture which can be press-molded by known methods. In another method, the starting materials are admixed uniformly with an organic binder or water and then the admixture is formed into a shaped article by extrusion molding, injection molding or the like. If desired, the thus shaped article is machined or treated to remove binder. The shaped mixture (green article) is sintered in an inert atmosphere such as argon, helium, nitrogen or the like at a temperature of from 1900 to 2300°C., e.g. for from 10 minutes to 10 hours. When the sintering temperature is lower than 1900°C., the resulting sintered article has a low sintered density, and when the sintering temperature exceeds 2300°C., evaporation of silicon carbide and coarse growth of crystal grains occurs and the resulting sintered article has low mechanical strength, so that such lower and higher sintering temperatures are not preferred.

It is not fully understood why, by the present invention, it is possible to obtain a sintered article having high sintered density and excellent mechanical strength. However, it has been found that using tar pitch as densification aid restrains the growth of crsytal grains of silicon carbide and has the desirable effect of removing the oxide layer from the surface when the green shaped article is calcined at a temperature of 1200°C or higher. As a result, the sintering takes effect in the presence of smaller amounts of boron as densification aid than in the conventional method when the shaped mixture of silicon carbide is sintered at a sintering temperature of 1900°C or higher. Further, the addition of silicon powder as densification aid in the invention restrains the decomposition and evaporation silicon carbide caused by the surface diffusion and vapor phase diffusion of silicon component of silicon carbide on particle surfaces when grains of silicon carbide grow.

As a result, a high-density sintered article can be prepared without lowering its mechanical strength even in the presence of a reduced amount of tar pitch.

By the present invention it has become possible to produce a high-density, high-strength sintered silicon carbide article having a sintered density of at least 90%, preferably 95% or more of the theoretical density of the sintered article and mechanical strength (bending strength) of 50 kg/mm² or higher.

Thus, the present invention has industrial significance as a method for manufacturing industrially mechanical parts such as turbine blades, pumps and the like.

The present invention is illustrated by the following non-limiting Examples.

Example 1

After 6 g of coal tar pitch (having a carbon yield of 45% by weight after carbonization) was dissolved in 9 g of quinoline, 200 g of benzene was mixed with the solution. To the resulting solution, 100 g of α-phase silicon carbide having a silicon carbide content of 96% by weight and a BET specific surface area of 9 m²/g, 0.15 g of boron carbide powder passing through 1200 mesh (12.5 μ) and 0.5 g of silicon powder having an average particle size of 3 microns were added and the mixture was mixed for 3 hours using a plastics ball mill. The resulting mixture was dried at 60°C, in a nitrogen gas stream, and then after the dried powder was pulverized, it was sieved using a 180 mesh (85 μ) screen. After the resulting pulverized mixed powder was cold pressed, it was charged into a rubber mold and then subjected to hydrostatic pressure press compacting under compacting pressure of 2 tons/cm² (2×10⁷ kg/m²) to prepare a green shaped article having dimensions of 50×30×4 m×10⁻³. The pressed compact had a bulk density of 1.7 g/cm³ (1.7×10⁶ g/m³).

Subsequently, after the said green article was calcined at 600°C. for 1 hour in an argon gas stream, it

3

was further sintered at 2050°C. for 30 min in an argon gas atmosphere. The resulting sintered article had a sintered density of 3.12 g/cm³ (3.12×10⁶ g/m³), and 3 point bending strength (JIS R-1601) of 60 kg/mm² (588 MPa).

Comparative example 1

A comparative silicon carbide sintered article was prepared under the same conditions as in Example 1 but with no addition of silicon powder, and the thus obtained sintered article had a sintered density of 2.85 g/cm³ (2.85×10⁶ g/m³) and 3 point bending strength of 32 kg/mm² (314 MPa).

Examples 2—3 and comparative examples 2—8

Sintered silicon carbide articles were prepared under the same conditions as in Example 1 but using raw materials as shown in Table 1. The density of the green articles and the sintered density and bending strength of the sintered articles are shown in Table 1.

TABLE 1

| | Silicon carbide 100 parts by weight | Boron carbide (pts. by weight) | Pitch (pts. by weight) | Silicon (pts. by weight) | Compact density (g/cm$^3$) (10$^6$ g/m$^3$) | Sintering temp (°C) | Sintered density (g/cm$^3$) (10$^6$ g/m$^3$) | Bending strength (kg/mm$^2$) (9.8 MPa) |
|---|---|---|---|---|---|---|---|---|
| Example 2 | alpha 9 m$^2$/g | 0.15 | 6 | 1.0 | 1.7 | 2050 | 3.15 | 62 |
| Example 3 | beta 9 m$^2$/g | 0.15 | 6 | 0.5 | 1.8 | 2050 | 3.10 | 60 |
| Comparative example 2 | alpha 9 m$^2$/g | 0.2 | 6 | 1.0 | 1.7 | 2050 | 3.15 | 45 |
| Comparative example 3 | alpha 9 m$^2$/g | 0.02 | 6 | 1.0 | 1.7 | 2050 | 2.60 | 25 |
| Comparative example 4 | alpha 9 m$^2$/g | 0.15 | 12 | 1.0 | 1.5 | 2050 | 3.05 | 50 |
| Comparative example 5 | alpha 9 m$^2$/g | 0.15 | 1 | 1.0 | 1.75 | 2050 | 2.40 | 20 |
| Comparative example 6 | alpha | 0.15 | 6 | 5.0 | 1.65 | 2050 | 2.85 | 28 |
| Comparative example 7 | alpha 9 m$^2$/g | 0.15 | 6 | 1.0 | 1.7 | 1800 | 2.35 | 20 |
| Comparative example 8 | alpha 9 m$^2$/g | 0.15 | 6 | 1.0 | 1.7 | 2350 | 3.0 | 30 |

EP 0 159 186 B1

## Claims

1. A method for producing a sintered silicon carbide article having a high density (or a density of at least 75% of the theoretical density) by mixing silicon carbide powder with a boron compound and tar pitch, shaping the resulting mixture and then sintering the shaped green article at a temperature of from 1900 to 2300°C in an inert atmosphere, characterised in that 2—10 parts by weight of the tar pitch, 0.03—0.15 parts by weight (calculated as boron) of the boron compound and 0.3—3 parts by weight of silicon powder are mixed with 100 parts by weight of the silicon carbide powder.

2. A method according to Claim 1, wherein the silicon carbide powder consist essentially of silicon carbide selected from alpha phase silicon carbide, beta phase silicon carbide and mixtures thereof.

3. A method according to claim 1 or 2 wherein the finely divided silicon carbide powder has an average particle size of 1 micrometer or less.

4. A method according to any preceding claim wherein the tar pitch is an organic solvent-soluble coal tar pitch or oil tar pitch having a carbonization ratio of 40—60% by weight.

5. A method according to any preceding claim wherein the boron component is at least one of boron and boron carbide.

6. A method according to any preceding claim wherein the silicon carbide powder, boron component, silicon powder and tar pitch are mixed uniformly using an organic solvent or water and the resulting mixture is shaped by slip casting.

7. A method according to any of claims 1 to 5 wherein the silicon carbide powder, boron component, silicon powder and tar pitch are mixed uniformly using an organic solvent or water, the resulting dispersion is spray dried to obtain a granular mixture, and the granular mixture is molded to desired shape by press-molding.

8. A method according to any of claims 1 to 5 wherein the silicon carbide powder, boron compound, silicon powder and tar pitch are admixed uniformly with an organic binder or water and then the admixture is shaped article by extrusion molding or injection molding.

9. A method according to any preceding claim wherein the inert atmosphere comprises argon, helium or nitrogen gas.

## Patentansprüche

1. Verfahren zur Herstellung eines gesinterten Siliziumcarbidgegenstandes mit einer hohen Dichte (oder einer Dichte von wenigstens 75% der theoretischen Dichte) durch Vermischen von Siliziumcarbidpulver mit einer Borverbindung und Teerpeech, Verformen der erhaltenen Mischung und anschließendes Sintern des verformten grünen Gegenstandes bei einer Temperatur von 1900 bis 2300°C in einer inerten Atmosphäre, dadurch gekennzeichnet, daß 2 bis 10 Gewichtsteile des Teerpeches, 0,03 bis 0,15 Gewichtsteile (berechnet als Bor) der Borverbindung und 0,03 bis 3 Gewichtsteile Siliziumpulver mit 100 Gewichtsteilen des Siliziumcarbidpulvers vermischt werden.

2. Verfahren nach Anspruch 1, wobei das Siliziumcarbidpulver im wesentlichen aus Siliziumcarbid besteht, ausgewählt aus alpha-Phase-Siliziumcarbid, beta-Phase-Siliziumcarbid und Mischungen davon.

3. Verfahren nach Anspruch 1 oder 2, wobei das feinteilige Siliziumcarbidpulver eine durchschnittliche Teilchengröße von 1 Mikrometer oder weniger aufweist.

4. Verfahren nach einem der vorhergehenden Ansprüche, wobei das Teerpech ein in einem organischen Lösungsmittel lösliches Kohleteerpech oder Ölteerpech mit einem Verkohlungsverhältnis von 40 bis 60%, bezogen auf das Gewicht, ist.

5. Verfahren nach einem der vorhergehenden Ansprüche, wobei die Borkomponente wenigstens eine aus Bor und Borcarbit ist.

6. Verfahren nach einem der vorhergehenden Ansprüche, wobei das Siliziumcarbidpulver, die Borkomponente, das Siliziumpulver und das Teerpech gleichmäßig unter Verwendung eines organischen Lösungsmittel oder Wasser vermischt werden und die erhaltene Mischung durch Schlickergießen verformt wird.

7. Verfahren nach einem der Ansprüche 1 bis 5, wobei das Siliziumcarbidpulver, die Borkomponente, das Siliziumpulver und das Teerpech gleichmäßig unter Verwendung eines organischen Lösungsmittels oder Wasser vermischt werden, die erhaltene Dispersion zur Gewinnung einer körnigen Mischung getrocknet wird und die körnige Mischung zu der gewünschten Form durch Pressverformen verformt wird.

8. Verfahren nach einem der Ansprüche 1 bis 5, wobei das Siliziumcarbidpulver, die Borverbindung, das Siliziumpulver und das Teerpech gleichmäßig mit einem organischen Bindemittel oder Wasser vermischt werden und dann die Mischung durch Extrudieren in ein geschlossenes Werkzeug oder Spritzgießen verformt wird.

9. Verfahren nach einem der vorhergehenden Ansprüche, wobei die inerte Atmosphäre aus Argon-, Helium- oder Stickstoffgas besteht.

## Revendications

1. Procédé de production d'un corps en carbure de silicium fritté ayant une haute masse volumique (ou une masse volumique d'au moins 75% de la masse volumique théorique) par mélange de carbure de silicium en poudre avec un composé de bore et un brai, mise en forme du mélange résultant, puis frittage du corps façonné à l'état vert à une température de 1900 à 2300°C dans une atmosphère inerte, caractérisé en ce qu'on mélange 2 à 10 parties en poids du brai, 0,03 à 0,15 partie en poids (exprimé en bore) du composé de bore et 0,3 à 3 parties en poids de silicium en poudre avec 100 parties en poids du carbure de silicium en poudre.

2. Procédé suivant la revendication 1, dans lequel le carbure de silicium en poudre est essentiellement constitué de carbure de silicium choisi entre le carbure de silicium en phase alpha, le carbure de silicium en phase bêta et leurs mélanges.

3. Procédé suivant la revendication 1 ou 2, dans lequel le carbure de silicium en poudre finement divisé à un diamètre moyen des particules égal ou inférieur à 1 micromètre.

4. Procédé suivant l'une quelconque des revendications précédentes, dans lequel le brai est un brai de goudron de houille ou un brai de pétrole soluble dans les solvants organiques, ayant un taux de carbonisation de 40 à 60% en poids.

5. Procédé suivant l'une quelconque des revendications précédentes, dans lequel le composant contenant du bore est l'un au moins du bore et du carbure de bore.

6. Procédé suivant l'une quelconque des revendications précédentes, dans lequel le carbure de silicium en poudre, le composant contenant du bore, le silicium en poudre et le brai sont mélangés uniformément en utilisant un solvant organique ou de l'eau de le mélange résultant est façonné par moulage en barbotine.

7. Procédé suivant l'une quelconque des revendications 1 à 5, dans lequel le carbure de silicium en poudre, le composant contenant du bore, le silicium en poudre et le brai sont mélangés uniformément en utilisant un solvant organique ou de l'eau, la dispersion résultante est séchée par pulvérisation pour former un mélange granulaire et le mélange granulaire est moulé à la forme désirée par moulage sous pression.

8. Procédé suivant l'une quelconque des revendications 1 à 5, dans lequel le carbure de silicium en poudre, le composé de bore, le silicium en poudre et le brai sont mélangés uniformément avec un liant organique ou de l'eau, puis le mélange est façonné en un corps par moulage par extrusion ou moulage par injection.

9. Procédé suivant l'une quelconque des revendications précédentes, dans lequel l'atmosphère inerte est constituée d'argon, d'hélium ou d'azote gazeux.